Europäisches Patentamt

European Patent Office

Office européen des brevets

(19)

(11) Publication number: **0 125 744**
A2

(12) **EUROPEAN PATENT APPLICATION**

(21) Application number: **84300645.3**

(22) Date of filing: **02.02.84**

(51) Int. Cl.³: **H 04 L 11/16**
**H 04 M 11/06, H 04 Q 11/04**
**H 04 L 11/20**

(30) Priority: **13.05.83 GB 8313195**

(43) Date of publication of application:
**21.11.84 Bulletin 84/47**

(84) Designated Contracting States:
**BE DE FR IT SE**

(71) Applicant: STANDARD TELEPHONES AND CABLES
PUBLIC LIMITED COMPANY
190 Strand
London, WC2R 1DU(GB)

(72) Inventor: Shortland, Michael Thomas
44, Elmbridge
Old Harlow Essex(GB)

(74) Representative: Dennis, Mark Charles
STC Patent Department Edinburgh Way
Harlow Essex CM20 2SH(GB)

(54) Closed loop telecommunication system.

(57) In a closed loop telecommunications system, e.g. for use in a PBX, the loop interconnects a number of nodes each of which serves at least one terminal. The loop includes a long shift register or other storage device via which all messages in the loop pass and which ensures that the loop's time cycle exactly equals the interval between two consecutive speech samples. It also ensures that this cycle time provides an integral number of pulse times.

Normal speech connections are set up by circuit-switching in which each call uses one time slot, with the setting up message sent in packet mode from the calling to the called mode. Packet mode uses one or more slots into which a packet is fitted, the slots used to convey a packet being so chosen as not to interfere with any circuit-switched connection.

EP 0 125 744 A2

TITLE MODIFIED
see front page
DATA NETWORK

## INTRODUCTION

This invention relates to an automatic telecommunications system, especially for use in a PBX or a PABX.

Many telecommunication systems use circuit-switching with communications effected digitally. This often uses an 8 KHz sampling rate, with each sample conveyed in PCM manner by an 8-bit combination. Thus these systems are 64 Kbit/sec systems where one time slot in the cycle is used, or multiples of 64 Kbit/sec where two or more time slots are used. In such systems it is often desired to provide for data transmission, but this is not always convenient in such a system. This has lead to the investigation of the use of local area network (LAN) techniques which are based on packet structures, which are suitable for data, which is usually burst-type traffic. However, if voice or video traffic has to be included, such a structure is not ideal, as such traffic calls for many short messages, which are uneconomical in bandwidth terms.

One system of the type referred to above is described in European Application No. 0077563 A1 (CSELT Centro Studi e Laboratori Telecommunicazioni S.p.A.), which system allows packet synchronous speech communications without the use of a centralized device to synchronize the network stations. To effect this, the active periods of each station are sub-divided asynchronously, and packet switched data accesses the transmission line by a distributed contention algorithm, e.g. CSMA-CD. The access to the line for a speech communication is obtained by the same contention technique as that used for data, but once a line has accessed the line for a speech communication, that communication is allotted a synchronous channel which is maintained for the duration of the communication. To effect that, each station organizes its activity into frames, having a duration equal to the speech packetization time, and builds up independently, on a frame-by-frame basis, the basis period timing map, by monitoring the transmission line activity and recording the beginning instants of speech packets. Provided that at the beginning of a particular busy period only the station that booked that period can transmit, each busy period in the map sets up a synchronous channel for a speech communication.

An object of the invention is to provide an improved system of the same general type as that indicated above.

Another system of this general type is described in PCT Patent Application No. WO 83/00412 (Western Electric Co.), to which corresponds British Published Application No. 2103054A. The key feature of this system is that it reserves slots for the circuit-switched transmissions only. A node seizes a non-reserved slot to transmit packet data "without reservi or busying that time slot". Hence clashes can occur, and much interest is evinced in the specification on a statistical method to reduce the occurrence of such clashes.

### SUMMARY OF THE INVENTION

According to the invention, there is provided an automatic telecommunications system, in which communication connections can be set up in circuit-switched or packet-switched manner, in which the terminals served by the system are each connected to a node of the system, the nodes being interconnected by a time division multiplex highway of the closed loop type, in which the timing of the system is under the control of a master clock pulse connected to the highway and which emits an unique synchronisation signal once per cycle of the system, in which when a circuit-switched connection is to be set up a free time slot or time slots is or are allocated to that connection and the communication takes place by the interchange of multi-digit signal combinations using the repeated occurrences of the allocated time slot or slots, in which when a packet-switched connection is to be set up one or more of the free slots on the highway are used for the connection, the multi-digit packet which is sent in respect of that connection including the address of the terminal for which that packet is destined, in which where a packet-switched connection uses a plurality of said time slots those time slots occur either successively in the cycle or successively in the cycle but with interruptions in the cycle due to any existing circuit-switched connections, in which to set up a circuit-switched connection scanning means monitors the highway for a free time slot, and in which when a free time slot has been found a packet message is sent to the called node identifying the time slot which has been found, whereafter the nodes involved in that circuit-switched connection are locked to that time slot for the duration of the connection.

It will be seen that the use of a centralised clock source avoids the need for any means to avoid the effects of clashes, also called collisons in the LAN art. Thus in the cited European Application, the use of CSMA-CD, plus busy-period timing maps at each node are needed. Naturally they introduce added complexity at the nodes, which leads to increased expenditure, especially in a system with a great many nodes. The cited PCT Application needs to include the complexities of statistical techniques to minimize the occurrence of clashes. The use of the arrangements set out above avoids the risk of clashes since each slot in use is clearly marked as such. Thus in our case the slots used for circuit switched connections are identified solely by the slot's position in the frame; since the connection is set up on the basis of a packet message sent from the calling to the called node, circuit switching is extremely simple.

The approach used herein where a long packet message may "flow" around one or more busy slots in use for circuit switched connections enables a long message to be sent using short slots. Since short slots can be used, the system's capacity in respect of circuit switched connections is enhanced, and delay thereto is low.

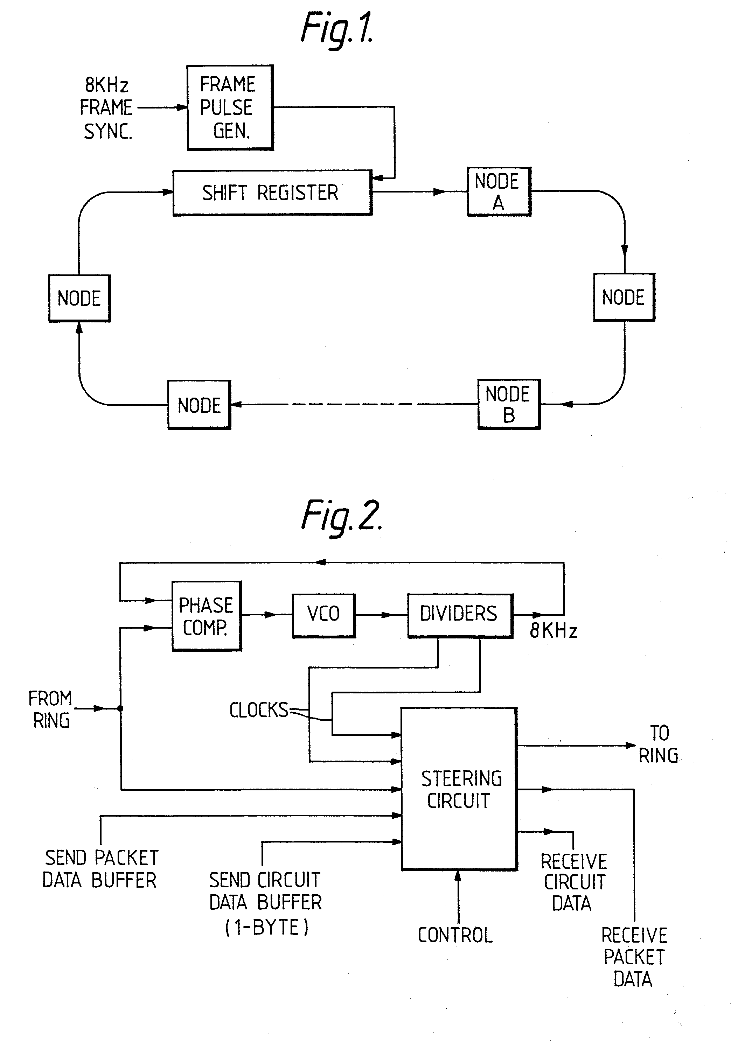

An embodiment of the invention will now be described with reference to the accompanying drawing, in which Fig. 1 is a highly simplified block diagram of the application of the invention to a closed-loop system, and Fig. 2 is a highly simplified block diagram of one of the system's nodes.

In a system embodying the invention, a single long shift register is included in the ring, and its master clock is so controlled as to give an integral number of pulses within a loop delay of exactly 125 microseconds, which assumes (in the case of speech) a sampling frequency of 8 KHz/secs. The main function of the shift register (or other storage device) included in the ring is to ensure that the time for a signal to go all the way round the ring is exactly 125 microsecs, i.e. exactly the time between successive samples when the system is handling a simple circuit switched connection. There is in the ring a master station, which may be co-located with the shift register and which generates a framing pulse every 125 microseconds. A frame includes $n$ 10 bit time-slots, where $n$ is the desired number of simultaneous circuit-switched connections.

The first two bits in each of these time slots are marker bits, whose use will be clear from the following table.

| Bit 1 | Bit 2 | Other Eight Bits |
|-------|-------|------------------|
| 1 | 0 | Circuit-switched data |
| 1 | 1 | Not used - could be a token |
| 0 | 1 | Packet Data |
| 0 | 0 | No data |

A frame synchronisation signal, which occurs once per frame, is in the system described a block of 20 continuous 1's, which is an unique sequence.

Referring now to Fig. 1, if a first terminal, connected to node A, wishes to set up a circuit-switched connection to a terminal connected to node B, it looks first for the frame sync. signal, which as already indicated occurs once per frame. When it has found this, it counts through to the first time-slot which has neither of its first two bits set to 1 (see table above), e.g. time-slot N. It then sets bit 1 of that time slot to 1, thus seizing that slot for its own exclusive use as a circuit-switched channel. Then the first terminal sends a packet message to the wanted terminal in the normal way (see below) to "tell" that terminal to "listen" to time slot N. The first terminal then puts the byte to be sent in the last eight positions of time slot N. The circuit-switched connection is thus set up.

Return data from the wanted terminal to the calling terminal is sent in the same time slot on its return trip, i.e. from node B to node A in the same direction around the loop.

A few slots are permanently unavailable for use for circuit-switched connections, to enable sufficient signalling to service those connections. This, of course, includes the packet message referred to above for call setting.

We now consider the packet structure, used for the call setting and other messages needed in connection with the circuit-switched connections. When a terminal connected to node A has a packet to send, it scans the time slots until it finds one whose first bit is <u>not</u> set to 1, and when such a time slot is found its second bit is set to 1 to indicate that the time slot is in use for packet data. Then it transmits eight bits of its message in the last eight bit places. The terminal connected to node B only "sees" those slots when the second bit is set to 1, and ignores any others as far as packet data is concerned. Note here that a packet includes a header with a destination address, and possibly also an originator's address, followed by the message proper. Thus the normal ring structure for packet data carries on as though the circuit-switched connections are not there.

The above description of packet structure has not considered packet access, except to indicate that it is of the ring type. In the present arrangement, the indication is giving by a time slot with both its definition bits set to 1 for use as a token. A terminal wishing to send a packet sets the first bit of the token to 0, which gives it priority to send one complete packet. When it has sent the last bit of that packet, it sets the first available time slot for the indication, i.e. with its first two bits at 11. It then checks for the first slot used for the message as it comes round again and deletes all the packet markers, up until the last time slot sent.

Although the circuit-switched time slots mentioned above have a useful length of 8 bits giving a 64 Kbits/sec. connection, some time slots could be extended to 256 bits to give 2048 Kbits/sec. connections, e.g. for viewphones. Again, some could be 8500 bits long to give 68 Mbit/sec, for full broadcast-standard video. These longer slots can be created dynamically by marking the number of shorter slots needed and telling the destination node the numbers of the slots it should listen to sequentially. If the system has some measure of central control, different length slots can be generated according to the loading of the ring. In such case a message is sent to all nodes informing them of the new arrangements.

Several telephones or other 64 KHbit/sec. terminals can be combined into a 2 Mbit/sec. structure, so as to need only one high speed ring connection node. This form of multiplexing is fully "transparent" as far as the above-described circuit switching is concerned, since each 64 Kbit/sec. time slot is still usable separately. Thus if terminals I and II are both connected to one node, and terminals III and IV are both connected to another node, I can "tell" III to "listen" to one time slot, and II can tell IV to listen to another time slot quite independently.

Where a priority telephone is needed, e.g. a security line, a special dedicated time slot is permanently allocated thereto; so that there is a guaranteed circuit-switched connection between any telephone and the priority telephone. A true broadcast capability is also available, by instructing any number of terminals to listen to the same time slot.

In conventional systems the provision of electronic mail is inconvenient as it can generate very long files, e.g. 20 Kbyte to 0.5 Mbyte. These take a long time to send even at high bit rate, e.g. 8 ms. at 50 Mbit/sec. This causes unacceptable delay to voice packets if sent on a normal packet-only ring. With the present system, however, such a facility would not interrupt circuit-switched slots however long the message.

If a system such as described above has a clock-rate of 50 Mbits/s., the 125 microsecond frame contains 625 10-bit time slots (permitting about 6000 extensions) or 20 256-bit slots and 113 10-bit slots (giving 1000 extensions and a number of viewphones). The number of terminals is unlimited. If dynamic creation of the longer slots is used, the capacity would probably increase somewhat due to improved capacity sharing.

For a 1 km ring, the required shift-register has 6000 steps, less one bit delay per node.

The message rate (with no circuit-switched connections set up) with the simple system outlined above is 8000 messages per second of 5000 bits each (or 4000 of 10 000 bits each). These rates would all be reduced by a factor of 2 if the circuit switch were 50% loaded.

Message rate for very short messages is limited by the loop delay. The mean loop delay is 63 microseconds, giving about 16000 short messages per second, these 'short' messages being up to about 800 bits long. These rates would not be significantly reduced by a 50% loading of the circuit switch. Also the need for short messages will have been reduced by the existence of the circuit-switched channels.

Alternatively, a 'short' message can be defined as having a fixed maximum length of, say, 256 bits and be sent complete in a 256-bit time slot. This gives (with the above viewphone system) 160000 short messages per second, though this would be halved for a 50% loading of the viewphone section of the circuit switch.

For comparison, a typical computer terminal generates around 10 short messages per second. Or a typical ISDN phone generates/receives approximately 10 short messages per call. Thus all 625 circuit-switched paths through the ring can be set up/broken down once per second with no queueing, and simultaneously 975 packet-mode data terminals may be operating. Again these figures would not deteriorate significantly with a 50% mean occupancy of the circuit-switched channels.

Circuit-switched channels are not protected against errors, but since they are not protected over the remainder of the link where the probability of error is much higher, this does not seem to be a problem. The messages may have whatever form of error protection is considered appropriate. The most serious error event is for a terminal to miscount the time slots, but this could only result in a one-byte error in the time slot and/or that adjoining or in a message (which is error-protected).

The structure and operation are independent of the bit-rate on the ring (for a higher bit rate the 125 microseconds frame remains but it contains more and/or longer time slots) so it would be possible - by just replacing ring repeaters and some minor changes - to upgrade to a higher bandwidth at a future date. Particularly if the aforementioned 2 Mbit muxes are used, the number of repeaters involved may be quite small, i.e. 200 for a 6000-line exchange. This would allow the later introduction of full-standard video etc. These repeaters can be located at the nodes, or be separate therefrom.

Thus it is possible to make a mixed-service PBX, using a largely distributed structure which has the capacity to handle the different types of data efficiently and with a minimum of protocol complication. The PBX has the following desirable features;

(a)     Transfer rates for files are never limited by the capacity of the PBX (unless devices can operate at *40 MHz).

(b)     Signalling for ISDN calls will never be limited by the capacity of the PBX (the actual circuit capacity will be exceeded first).

(c)     only a maximum of 125 microseconds delay in any circuit-switched path.

(d)     system may either cater for full-standard video or be easily upgradeable to do so. Broadcast is easily handled.

(e)     software may be distributed to nodes or centralised (in a call-handling 'server') or a mixture of both.

(f)     there are a minimum of active devices distributed round the ring (the long central shift-register can be duplicated).

In the arrangement described above, the cycle time of the ring is equal to the interval between two speech samples.  In fact it could be an integral multiple
of this figure.  Thus if it were twice this figure, each
slot would contain two speech samples.

CLAIMS :

1.      An automatic telecommunications system, in which communication connections can be set up in circuit-switched or packet-switched manner, in which the terminals served by the system are each connected to a node of the system, the nodes being interconnected by a time division multiplex highway of the closed loop type, in which the timing of the system is under the control of a master clock pulse connected to the highway and which emits an unique synchronisation signal once per cycle of the system, in which when a circuit-switched connection is to be set up a free time slot or time slots is or are allocated to that connection and the communication takes place by the interchange of multi-digit signal combinations using the repeated occurrences of the allocated time slot or slots, in which when a packet-switched connection is to be set up one or more of the free slots on the highway are used for the connection, the multi-digit packet which is sent in respect of that connection including the address of the terminal for which that packet is destined, in which where a packet-switched connection uses a plurality of said time slots those time slots occur either successively in the cycle or successively in the cycle but with interruptions in the cycle due to any existing circuit-switched connections, in which to set up a circuit-switched connection scanning means monitors the highway for a free time slot, and in which when a free time slot has been found a packet message is sent to the called node identifying the time slot which has been found, whereafter the nodes involved in that circuit-switched connection are locked to that time slot for the duration of the connection.

2.      A system as claimed in claim 1, in which a shift register or other storage device is connected in the time division multiplex highway, the dimensions of that device being such that the cycle time of the closed loop exactly equals the time between successive multi-digit combinations of a circuit-switched connection.

3.    A system as claimed in claim 1 or 2, and in which some at least of the nodes each serve two or more of the terminals.

1/1

0125744

Fig.1.

Fig.2.